**Europäisches Patentamt**

**European Patent Office**

**Office européen des brevets**

(19)

(11) Veröffentlichungsnummer : **0 340 621 B1**

(12) # EUROPÄISCHE PATENTSCHRIFT

(45) Veröffentlichungstag der Patentschrift :
18.12.91 Patentblatt 91/51

(51) Int. Cl.⁵ : **B60H 1/00**

(21) Anmeldenummer : 89107571.5

(22) Anmeldetag : 26.04.89

(54) **Fahrzeugheizung.**

(30) Priorität : 06.05.88 DE 3815467

(43) Veröffentlichungstag der Anmeldung :
08.11.89 Patentblatt 89/45

(45) Bekanntmachung des Hinweises auf die
Patenterteilung :
18.12.91 Patentblatt 91/51

(84) Benannte Vertragsstaaten :
DE FR GB IT SE

(56) Entgegenhaltungen :
DE-A- 3 638 471
US-A- 4 556 171

(56) Entgegenhaltungen :
PATENT ABSTRACTS OF JAPAN, Band 11, Nr.
11 (M-578)[2558], 8. April 1987; & JP-A-61 257
314 (HITACHI CHEM. CO. LTD) 14-11-1986
PATENT ABSTRACTS OF JAPAN, Band 10, Nr.
115 (M-474)[2172], 30. April 1986; & JP-A-60 244
613 (NIPPON DENSO K.K.) 04-12-1985

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Blüher, Peter
Wolfzornerstrasse 19
W-8024 Oberhaching Deisenhofen (DE)**
Erfinder : **Bednarek, Henryk
Friseneggerstrasse 3
W-8910 Landsberg (DE)**

EP 0 340 621 B1

**Beschreibung**

Die Erfindung bezieht sich auf eine Fahrzeugheizung der im Oberbegriff des ersten Anspruchs angegebenen Art.

Eine gattungsgemäß aufgebaute Fahrzeugheizung beschreibt die JP-A-61-257314. Diese Heizungsanlage weist einen Wärmespeicher auf, der über je ein 3-Wege-Ventil in die Vorlauf- und Rücklaufleitung des Heizungswärmetauschers für den Fahrzeuginnenraum einschaltbar ist. Bei dieser Anordnung kann der Wärmespeicher als motorunabhängige Standheizung betrieben werden, wenn im Fahrzeugbetrieb der Wärmespeicher mit Wärme beladen wird.

Nachteilig bei dieser Anordnung ist es, daß nicht gleichzeitig ein Beladen des Wärmespeichers möglich ist, wenn die Fahrzeugheizung in Betrieb ist, da die vorgesehenen 3-Wege-Ventile nur diskrete Schaltzustände aufweisen. Darüber hinaus ist es hierbei nicht möglich, den Wärmespeicher mit der von dem Heizungswärmetauscher nicht benötigten Überschußenergie zu beladen. Auch erfolgt der Beladevorgang selbst sehr langsam, da die vorgesehene motorunabhängige Umwälzpumpe in der Heizungsrücklaufleitung vorgesehen ist.

Aufgabe der vorliegenden Erfindung ist es, die eingangs genannte Fahrzeugheizung unter weitestgehender Beibehaltung ihres einfachen Aufbaus so zu verbessern, daß sie in allen Betriebszuständen funktionsfähig ist.

Diese Aufgabe wird erfindungsgemäß durch die kennzeichnenden Merkmale des ersten Anspruchs gelöst. Aufgrund dieser Lösung ist es möglich, für den Be- und Entladevorgang des Wärmespeichers getrennte Leitungswege vorzusehen. Damit besteht die Möglichkeit, den Wärmespeicher mit der von der Heizungsanlage nicht benötigten überschüssigen Wärmemenge zu beladen. Damit ist sichergestellt, daß immer einen ausreichende Fahrzeugheizung zur Verfügung steht.

Das Beladen des Wärmespeichers geht insbesondere sehr schnell vor sich, da die vorhandene Umwälzpumpe auch beim Beladevorgang genutzt werden kann, so daß ein von der Brennkraftmaschine unabhängiger Kühlmitteldurchsatz auch beim Beladen des Wärmespeichers möglich ist, wenn das Kühlmittel der Brennkraftmaschine heiß genug ist, um den Wärmespeicher zu beladen und gleichzeitig die Fahrzeugheizung zu übernehmen.

Die Weiterbildung nach Anspruch 2 hat den Vorteil, daß durch die Funktionstrennung der Umschaltfunktion und der Heizungsventilfunktion beide Funktionen sicher und ohne gegenseitige Beeinflussung ausgeführt werden können. Damit ist eine Beinfühligere Steuerung der Heizungsleistung möglich. Die nicht zum Heizen benötigte Wärmemenge kann somit sofort zum Beladen des Wärmespeichers verwendet werden.

Unterstützt wird das schnelle Beladen des Wärmespeichers durch die Weiterbildung nach Anspruch 3. Dies kann in besonders einfacher Weise dann erzielt werden, wenn die beiden vorgesehenen Ventile wechselweise arbeiten. Somit wird ein schnelles Beladen des Wärmespeichers erzielt, ohne negative Beeinflussung der Heizleistung des Wärmetauscher.

Eine Verringerung der Bauteile der Heizungsanlage wird durch die Weiterbildung nach Anspruch 4 erreicht.

Im folgenden wird die Erfindung anhand eines bevorzugten Ausführungsbeispiels näher erläutert.

Es stellen dar :

Fig. 1    einen schematisiert aufgebauten Heizkreislauf für eine Fahrzeugheizung mit einem Wärmespeicher als Heizmittellieferant ;

Fig. 2    den gleichen Heizkreislauf nach Fig. 1 in der Stellung zum Wiederaufladen des Wärmespeichers.

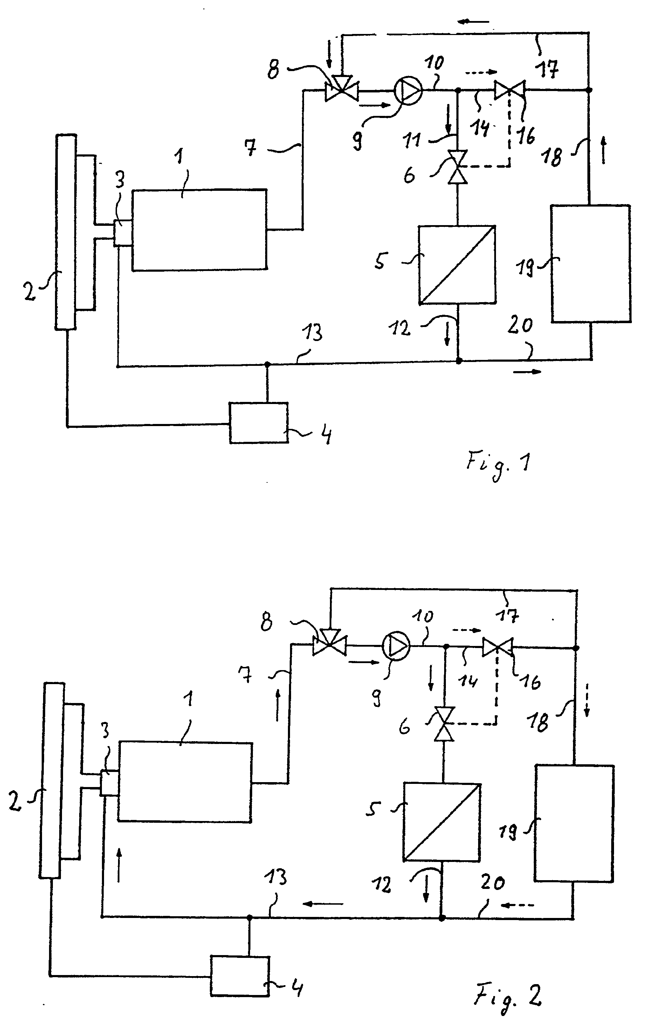

In Fig. 1 ist schematisch ein Kühl- und Heizkreislauf einer Brennkraftmaschine dargestellt. Hierbei ist die Brennkraftmaschine mit 1, deren Wärmetauscher (Kühler) mit 2, die Wasserpumpe mit 3 und der Kühlmittelausgleichsbehälter mit 4 bezeichnet.

Zum Heizen einer nicht näher dargestellten Fahrgastzelle ist der Wärmetauscher 5 vorgesehen. Sein Durchfluß wird gesteuert von einem Heizungsventil 6. Über die Leitung 7, das Umschaltventil 8, die motorunabhängig antreibbare Umwälzpumpe 9, die in der Leitung 10 eingebaut ist, die Leitung 11 mit dem eingebauten Heizungsventil 6, die Leitung 12 und die Rücklaufleitung 13, die in die Wasserpumpe 3 mündet, ist der Wärmetauscher 5 an den Kühlkreis der Brennkraftmaschine 1 angeschlossen.

Parallel zu diesem Heizungskreislauf zweigt an dem Verbindungspunkt der Leitung 10 mit der Leitung 11 die Leitung 14 ab, in der ein Ventil 16 eingebaut ist. Die Leitung 14 teilt sich anschließend in den Leitungszweig 17, der zurück zum Umschaltventil 8 führt. Der andere Leitungszweig 18 beinhaltet den Wärmespeicher 19, der über die Leitung 20 mit dem Verbindungspunkt der Leitungen 12 und 13 verbunden ist.

In dem in Fig. 1 dargestellten Ausführungsbeispiel sei angenommen, daß der Wärmespeicher 19 beladen ist, d.h. in der Lage ist, ein kaltes Kühlmittel zu erwärmen. Die Brennkraftmaschine 1 sei abgestellt, so daß auch die Kühlmittelpumpe 3 steht. Um nun den Wärmetauscher 5 mit erwärmtem Kühlmittel zu versorgen zum

2

Erwärmen der Fahrgastzelle, wird die Umwälzpumpe 9 eingeschaltet, das Heizungsventil 6 geöffnet sowie das Umschaltventil 8 derart geschaltet, daß die Leitung 17 mit der Leitung 10 verbunden ist unter Ausschalten der Leitung 7. In diesem Fall fördert die Umwälzpumpe 9 über das Umschaltventil 8 und die Leitungen 17 und 18 das Kühlmittel durch den Wärmespeicher 19 und über das Heizungsventil 6 in den Wärmetauscher 5. Von dort gelangt es über die Leitung 12 zur Leitung 20 wieder in den Wärmespeicher 19 zur erneuten Erwärmung zurück.

Sobald die gewünschte Temperatur in der Fahrgastzelle erreicht ist, wird die Zufuhr der Kühlflüssigkeit durch das Heizungsventil 6 gedrosselt. In dem Maße, wie das Heizungsventil 6 den Durchfluß durch die Leitung 11 zum Wärmetauscher 5 drosselt, wird das Ventil 16 geöffnet, so daß die von der Umwälzpumpe 9 geförderte nicht benötigte erwärmte Kühlflüssigkeit im Kreis umläuft. Dieser Kreis besteht aus der Leitung 10, der Leitung 14 und der Leitung 17. Diese Leitungen sind sinnvollerweise isoliert ausgeführt, so daß praktisch keine Wärmeverluste auftreten. Das Drosseln des Heizungsventils 6 kann dadurch geschehen, daß es getaktet angesteuert wird. Dies bedeutet für das Ventil 16, daß in den Schließphasen des Heizungsventils 6 das Ventil 16 geöffnet wird und umgekehrt. Damit wird der Vorteil erreicht, daß dem Wärmespeicher 19 nur die Energie entnommen wird, die zur Aufheizung benötigt wird.

Die Ansteuerung der einzelnen Ventile sowie der Umwälzpumpe 9 kann über eine Schaltelektronik erfolgen, an der auch der Einschaltzeitpunkt der Umwälzpumpe 9 eingestellt werden kann. Der vorhin beschriebene Heizkreislauf arbeitet in diesem Fall als Standheizung, die auch in geschlossenen Räumen (Garagen) eingesetzt werden kann, da hierbei keine Emissionen entstehen. Aufgrund der vorgeschlagenen Schaltung wird die Brennkraftmaschine 1 nicht aufgewärmt, so daß das gesamte in dem Wärmespeicher 19 gespeicherte heiße Kühlmittel einzig und allein zur Aufwärmung der Fahrgastzelle verwendet werden kann.

Selbstverständlich kann anstelle der Fahrgastzelle auch die Frontscheibe und/oder Lufteintrittsöffnungen im Windlauf in der Karosserie eines Fahrzeugs vorgewärmt werden. Wird nun die Brennkraftmaschine 1 gestartet und erreicht ihre Betriebstemperatur, so übernimmt das dort erwärmte Kühlmittel die Aufheizung der Fahrgastzelle. Zu diesem Zwecke wird das Umschaltventil 8 umgeschaltet. Dies bedeutet, daß nunmehr die Leitung 7 mit der Leitung 10 verbunden wird unter Abschaltung der Leitung 17. Dies geschieht immer dann, wenn das Kühlmittel im Motor wärmer ist als das aus dem Wärmespeicher 19 gelieferte Kühlmittel. Erfaßt wird dies durch geeignete Temperaturmeßfühler.

Durch das Umschalten des Umschaltventiles 8 wird nun das heiße Kühlmittel über die Umwälzpumpe 9 und die Leitung 10 und 11 zum Heizungsventil 6 und von dort weiter zum Wärmetauscher 5 gefördert. Es verläßt den Wärmetauscher 5 über die Leitung 12 und wird über die Leitung 13 von der Kühlwasserpumpe 3 angesaugt.

Je nach eingestellter Temperatur ist das Heizungsventil 6 kürzer oder länger geschlossen (bei getaktetem Betrieb), so daß das Ventil 16 entsprechend geöffnet bzw. geschlossen ist. Dadurch wird das nicht am Wärmetauscher 5 benötigte erwärmte Kühlmittel über die Leitung 14 in die Leitung 18 und von dort zu dem Wärmespeicher 19 gefördert. Es verläßt diesen über die Leitung 20 zur Pumpenvorlaufleitung 13. Dadurch wird sichergestellt, daß der Wärmespeicher 19 möglichst schnell beladen wird ohne die angeforderte Heizleistung des Wärmetauschers 5 zu beeinträchtigen. Diese Anordnung hat den Vorteil, daß nach Einsetzen der Heizungsregelung mit Hilfe des erwärmten Motorkühlmittels sofort die gesamte nicht benötigte Energie dem Wärmespeicher 19 zugeführt wird und damit zum frühstmöglichen Zeitpunkt die Wiederaufladung des Wärmespeichers 19 beginnt, so daß nach einem Abstellen der Brennkraftmaschine wieder der Wärmespeicher 19 beladen ist, um erwärmtes Kühlmittel für den Heizkreislauf zur Verfügung zu stellen.

Ein weiterer Vorteil der Anordnung besteht darin, daß während der Anwärmphase der Brennkraftmaschine 1 eine geringere Kühlwassermenge von ihr erwärmt werden muß, da in dieser Zeit der Heizungskreislauf aus dem Wärmespeicher 19 gespeist wird. Damit erreicht die Brennkraftmaschine wesentlich schneller ihre Betriebstemperatur und kann dadurch früher mit heißem Kühlmittel den Heizungskreislauf mit dem Wärmetauscher 5 versorgen. Dadurch ist sichergestellt, daß das im Wärmespeicher 19 gespeicherte heiße Kühlmittel nicht unnötig stark abkühlt, wenn es zu lange den Heizkreislauf aufrecht erhalten muß. Darüber hinaus wird dadurch eine sehr schnelle Wiederaufladung des Wärmespeichers erzielt, so daß selbst im Kurzstreckenverkehr einerseits die Brennkraftmaschine schnell ihre Betriebstemperatur erreicht und zum anderen der motorunabhängige Heizkreislauf jederzeit einsatzfähig ist.

Wird keine Heizleistung vom Wärmetauscher 5 gefordert, d.h., das Heizungsventil 6 ist geschlossen, so kann mit der beschriebenen Anordnung auch das Motorkühlwasser nach einem Kaltstart erwärmt werden. Hierzu wird das Umschaltventil 8 in die Stellung Beladen geschaltet, d.h., die Leitung 17 wird abgeschaltet. Da das Heizungsventil 6 geschlossen ist, ist das Ventil 16 geöffnet. Damit strömt in dem Wärmespeicher 19 erwärmtes Kühlmittel über die Leitungen 20 und 13 zur Wasserpumpe 3 und von dort in den Motor 1, den es nach Wärmeabgabe über die Leitung 7 wieder verläßt. Über die Umwälzpumpe 9 und die Leitungen 10, 14 und 18 gelangt es wieder in den Wärmespeicher 19.

Um alle beschriebenen Vorgänge möglichst einfach für die Bedienungsperson zu machen, sind alle Ventile 6, 8, 16 sowie die Umwälzpumpe 9 über eine geeignete Schaltelektronik miteinander verbunden, die ihrerseits

EP 0 340 621 B1

eine geeignete Eingabeeinheit aufweist. Mit den bereits bei den heute bekannten, wassergeregelten, thermostatisch gesteuerten Heizungssystemen üblichen Bedienungselementen stehen geeignete Eingabeeinheiten zur Verfügung. Auch ist es sinnvoll, während der Standheizungsphase mit Hilfe des Wärmespeichers die Heizungsanlage nur im Umluftbetrieb arbeiten zu lassen.

## Patentansprüche

1. Fahrzeugheizung für ein mit einer flüssigkeitsgekühlten Brennkraftmaschine (1) ausgerüstetes Fahrzeug, bestehend aus einem Heizungskreis mit einem flüssigkeitsdurchströmten Wärmetauscher (5), der über eine Zulaufleitung (7) und eine Rücklaufleitung (13) mit dem Kühlkreis der Brennkraftmaschine (1) verbunden ist, wobei in der Zulaufleitung (7) ein 3-Wege-Ventil (8) vorgesehen ist, dessen dritter Anschluß von einer Leitung (17) gebildet wird, die mit einem Wärmespeicher (19) verbunden ist, der parallel zum Wärmetauscher (5) geschaltet ist und in den Heizungskreis einschaltbar ist und mit einer motorunabhängig antreibbaren Umwälzpumpe (9) wobei zum Be- und Entladen des Wärmespeichers (19) seine Durchströmungsrichtung umkehrbar ist, dadurch gekennzeichnet, daß in Strömungsrichtung hinter dem Umschaltventil (8) von der Leitung (10) eine Bypass-Leitung (14) abzweigt, die die Leitung (10) mit dem Wärmespeicher (19) (Leitung 17) verbindet, daß die Umwälzpumpe (9) zwischen dem Umschaltventil (8) und dem Abzweig der Bypass-Leitung (14) vorgesehen ist und daß in der Bypass-Leitung (14) ein Ventil (16) eingebaut ist.

2. Fahrzeugheizung nach Anspruch 1, dadurch gekennzeichnet, daß in Strömungsrichtung der Kühlflüssigkeit vor dem Wärmetauscher (5) und hinter dem Abzweig der Bypass-Leitung (14) ein separat ansteuerbares Heizungsventil (6) vorgesehen ist.

3. Fahrzeugheizung nach Anspruch 1 oder 2, dadurch gekennzeichnet, daß das Heizungsventil (6) und das in der Bypass-Leitung (14) eingebaute Ventil (16) gegensinnig schalten.

4. Fahrzeugheizung nach einem der vorangegangenen Ansprüche, dadurch gekennzeichnet, daß das Heizungsventil (6) und das Ventil (16) in einem gemeinsamen Ventilgehäuse vereinigt sind.

## Claims

1. A vehicle heating system for a vehicle equipped with a liquid-cooled internal combustion engine (1), composed of a heating circuit with a heat exchanger (5) through which liquid flows, which heat exchanger is connected by way of an inflow conduit (7) and a return conduit (13) with the cooling circuit of the internal combustion engine (1), while in the supply conduit (7) there is provided a 3-way valve (8) the third connection of which is formed by a conduit (17) which is connected with a heat store (19) which is connected in parallel with the heat exchanger (5) and is connectable into the heating circuit, and having a circulating pump (9), drivable independently of the engine, while for the charging and discharging of the heat store (19) its direction of throughflow is reversible, characterised in that, after the change-over valve (8) in the direction of flow, a by-pass conduit (14) branches off from the conduit (10) and connects the conduit (10) with the heat store (19) (conduit 17), in that the circulating pump (9) is provided between the change-over valve (8) and the branch of the by-pass conduit (14), and in that a valve (16) is installed in the by-pass conduit (14).

2. A vehicle heating system according to Claim 1, characterised in that, before the heat exchanger (5) and after the branch-off of the by-pass conduit (14) in the direction of flow of the cooling liquid, a separately controllable heating valve (6) is provided.

3. A vehicle heating system according to Claim 1 or 2, characterised in that the heating valve (6) and the valve (16) installed in the by-pass conduit (14) operate in opposite directions.

4. A vehicle heating system according to any one of the preceding Claims, characterised in that the heating valve (6) and the valve (16) are united in one common valve housing.

## Revendications

1. Chauffage pour véhicule destiné à un véhicule équipé d'un moteur à combustion interne (1) à refroidissement par liquide, constitué par un circuit de chauffage avec, parcouru par le liquide, un échangeur de chaleur (5) relié par une canalisation d'alimentation (7) et par une canalisation de retour (13) avec le circuit de refroidissement du moteur à combustion interne (1), avec, dans la canalisation d'alimentation (7), une vanne à trois voies dont la troisième liaison est constituée par une canalisation (17) reliée à un accumulateur de chaleur (19) branché en parallèle avec l'échangeur de chaleur (5) et qu'on peut insérer dans le circuit de chauffage, et avec

4

une pompe de circulation (9) fonctionnant indépendamment du moteur et comportant une possibilité d'inversion du sens de l'écoulement pour la charge et la décharge de l'accumulateur de chaleur (19), caractérisé en ce que, dans le sens de l'écoulement et après la vanne d'inversion (8) de la canalisation (10) est branchée une canalisation de dérivation (14) reliant la canalisation (10) avec l'accumulateur de chaleur (19) (canalisation 17), en ce que la pompe de circulation (9) est prévue entre la vanne d'inversion (8) et le point de branchement de la canalisation de dérivation (14), et en ce qu'il existe une vanne (16) dans la canalisation de dérivation (14).

2. Chauffage pour véhicule selon la revendication 1, caractérisé en ce que, dans le sens de l'écoulement du liquide de refroidissement, il est prévu, avant l'échangeur de chaleur (5) et après le point de branchement de la canalisation de dérivation (14), une vanne de chauffage (6) commandée séparément.

3. Chauffage pour véhicule selon la revendication 1 ou 2, caractérisé en ce que la vanne de chauffage (6) et la vanne (16) insérées dans la canalisation de dérivation (14) fonctionnent de façon opposée.

4. Chauffage pour véhicule selon l'une des revendications précédentes, caractérisé en ce que la vanne de chauffage (6) et la vanne (16) sont réunies dans un boîtier commun.

Fig. 1

Fig. 2